# FASCICULE DE BREVET EUROPEEN

(11) **EP 1 579 173 B1**
(45) Date de publication et mention de la délivrance du brevet: **19.11.2014**
(21) Numéro de dépôt: 03799529.7
(22) Date de dépôt: 02.12.2003
(51) Int. Cl.: G01C 5/00

(54) **DISPOSITIF D'AFFICHAGE ANTICOLLISION TERRAIN EMBARQUE**
ONBOARD- TERRAINANTIKOLLISIONANZEIGEEINRICHTUNG
ONBOARD TERRAIN ANTICOLLISION DISPLAY DEVICE

(30) Priorité: 17.12.2002 FR 0216001
(43) Date de publication de la demande: 28.09.2005
(73) Titulaire: Thales, 92200 Neuilly Sur Seine (FR)
(72) Inventeur: MEUNIER, Hugues, Thales Intellectual Property, F-94117 Arcueil Cedex (FR)
(74) Mandataire: Brunelli, Gérald
(86) Numéro de dépôt international: PCT/EP2003/050924
(87) Numéro de publication internationale: WO 2004/055477

(56) Documents cités:
- FR-A- 2 813 963
- FR-A1- 2 773 609

## Description

La présente invention concerne la prévention des accidents aéronautiques dans lesquels un aéronef resté manoeuvrable s'écrase au sol. Ce type d'accident, qui représente un pourcentage important des catastrophes aériennes civiles du passé, est connu dans la littérature technique sous l'acronyme CFIT tiré de l'expression anglo-saxonne "Controlled Flight Into Terrain".

Pour lutter contre les risques de CFIT divers équipements d'alerte de proximité du sol ont été introduits à bord des aéronefs.

Une première génération d'équipements d'alerte de proximité sol appelés GPWS (acronyme de l'expression anglo-saxonne : Ground Proximity Warning System") surveillent la hauteur de l'aéronef au-dessus du sol mesurée par un radioaltimètre et la confronte :
- soit avec la vitesse verticale de descente de l'aéronef mesurée par un altimètre barométrique et/ou une centrale inertielle, la confrontation se faisant par comparaison simple (mode 1) ou, d'une manière plus sophistiquée, par filtrage non-linéaire (mode 2),
- soit avec une mesure antérieure de la hauteur au-dessus du sol pour signaler une perte anormale d'altitude au cours d'un décollage ou d'une approche manquée (mode 3),
- soit avec la vitesse air de l'aéronef et les positions du train d'atterrissage et des volets (mode 4),
- soit avec l'erreur verticale de présentation de l'aéronef dans le faisceau de guidage d'un ILS (acronyme tiré de l'anglo-saxon :" Instrument Landing System") lors d'un atterrissage (mode 5),
- soit avec la position de l'aéronef à proximité d'une piste d'atterrissage (call-out) ou avec l'angle de roulis,
- soit encore avec l'angle de roulis
pour déclencher une alerte sonore et/ou visuelle dans le cockpit en cas de détection d'un rapprochement dangereux avec le sol.

Malgré, cette première génération d'équipements GPWS le pourcentage d'accidents aéronautiques de type CFIT est resté élevé, essentiellement, pour les raisons suivantes :
- alertes de proximité sol tardives voire manquantes dues au principe même de la détection des risques de collision avec le sol par une radiosonde regardant sous l'avion et non au devant de l'avion,
- alerte de proximité sol manquante par suite d'une réduction temporaire, par l'équipage, de la sensibilité de l'équipement GPWS en vue de limiter les fausses alarmes. C'est le cas généralement des accidents intervenant au cours d'une approche finale d'un terrain d'atterrissage,
- alerte de proximité sol tardive car les seuils de déclenchement de l'équipement GPWS ont été momentanément relevés toujours pour limiter les fausses alarmes au cours d'une approche finale d'un terrain d'atterrissage,
- alerte de proximité sol dans les temps mais l'équipage a réagi trop tardivement ou n'a pas réagi à cause d'une désensibilisation de l'équipage résultant du taux trop élevé de fausses alertes, principalement dues à une prédiction de risque de collision à chaque fois que du terrain commence à monter sous l'avion de façon dangereuse ou non.

Le besoin d'améliorer ces équipements GPWS d'alerte sol de première génération s'est donc rapidement fait sentir. La voie suivie a été celle d'augmenter les informations prises en compte par les équipements d'alerte sol concernant le terrain situé au-devant et sur les côtés de la trajectoire prévisible à court terme de l'aéronef en profitant de l'avènement des systèmes de positionnement précis tels que les systèmes de positionnement par satellites et des cartes en relief numérisées mémorisables dans des bases de données embarquées.

Pour répondre à ce besoin d'amélioration, il est apparu une deuxième génération d'équipements d'alerte de proximité sol appelés TAWS (acronyme tiré de l'expression anglo-saxonne :"Terrain Awarness Waming System") remplissant en plus des fonctions GPWS habituelles, une fonction additionnelle d'alerte prédictive de risques de collision avec le relief et/ou des obstacles au sol dite FLTA (acronyme tiré de l'expression anglo-saxonne "prédictive Forward-Looking Terrain collision Awareness and alerting " ou encore GCAS (acronyme tiré de l'expression anglo-saxonne : " Ground Collision Avoidance system"). Cette fonction FLTA consiste à fournir des pré-alertes et alertes à l'équipage d'un aéronef à chaque fois que la trajectoire prévisible à court terme de l'aéronef rencontre le relief et/ou un obstacle au sol afin qu'une manoeuvre d'évitement soit engagée.

La trajectoire prévisible à court terme de l'aéronef est fournie par les équipements de navigation de l'aéronef à partir d'une mesure, dans les trois dimensions, de la position instantanée et du vecteur vitesse de l'aéronef donnés par un système de positionnement embarqué, typiquement : récepteur de positionnement par satellites et/ou centrale inertielle. Le relief et/ou les obstacles au sol font l'objet d'une représentation altimétrique extraite d'une base de données terrain et/ou obstacles embarquée à bord de l'aéronef ou au sol mais accessible de l'aéronef par ses moyens de radiocommunication.

La fonction FLTA détermine la trajectoire prévisible à court terme de l'aéronef à partir d'informations fournies par les équipements de navigation de l'aéronef, pour délimiter un ou plusieurs volumes de protection autour de la position courante de l'aéronef et engendrer des alarmes de risque de collision avec le relief et/ou des obstacles au sol à chaque intrusion, dans ces volumes de protection, du relief et/ou d'obstacles au sol survolés, modélisés à partir d'une représentation altimétrique extraite de la base de données terrain et obstacles.

Un volume de protection lié à l'aéronef est une partie de l'espace dans laquelle l'aéronef est susceptible d'évoluer dans un futur plus ou moins proche. Son importance et sa forme dépendent du délai recherché entre une alarme et la réalisation d'un risque de collision, et, dans une certaine mesure, de la manoeuvrabilité de l'aéronef à l'instant considéré, c'est-à-dire des capacités d'évolution de l'aéronef qui sont liées à ses performances, au module et à la direction de sa vitesse air, et à son attitude de vol (vol en ligne droite ou en virage, etc..). Il est défini par ses parois inférieure et frontale et éventuellement latérales.

Lorsqu'un risque de collision est détecté par la fonction FLTA, il est habituel d'engendrer, à l'intention de l'équipage de l'aéronef, une pré-alarme suivie d'une alarme.

La pré-alarme a pour but de donner conscience à l'équipage d'un risque à court terme de collision avec le terrain et/ou des obstacles sol afin qu'il en tienne compte dans le pilotage de l'aéronef. Elle est donnée suffisamment en avance pour que l'équipage puisse corriger sa trajectoire et se préparer à effectuer une éventuelle manoeuvre d'évitement. Elle consiste par exemple en un avertissement sonore répétitif de type :"Caution Terrain" doublé ou non d'une signalisation lumineuse et accompagnée ou non d'une symbologie spécifique sur un écran de visualisation (zone jaune par exemple) du cockpit.

L'alarme prévient l'équipage d'un risque à très court terme de collision avec le terrain et/ou des obstacles sol en lui conseillant fortement d'effectuer une manoeuvre immédiate d'évitement, en général de type « pull-up». C'est par exemple un avertissement sonore répétitif de type :" Terrain Terrain, Pull up" pouvant être également doublée d'une signalisation lumineuse et accompagnée ou non d'une symbologie spécifique sur un écran de visualisation (zone rouge par exemple) du cockpit. Quand une manoeuvre de type « Pull-up » n'est pas jugée faisable par le système, une autre alarme peut être émise (par exemple « Avoid Terrain »).

Lorsque le risque à court terme ou très court terme de collision avec le terrain et/ou avec des obstacles au sol ayant motivé une pré-alarme ou une alarme disparaît notamment en raison de l'exécution d'une manoeuvre d'évitement appropriée, la pré-alarme ou l'alarme est levée et les avertissements sonores et/ou lumineux supprimés.

Un tel dispositif fait l'objet des brevets français FR 2 689 668, FR 2 747 492, FR 2 773 609, FR 2 813 963 et des brevets américains correspondants US 5 488 563, US 5 638 282, US 6 088 654, US 6 317 663 dont le contenu descriptif est à considérer comme intégralement incorporé à la présente description.

Il est rapidement apparu qu'un affichage sur écran, d'une carte locale du terrain et/ou des obstacles au sol pouvait être d'une grande utilité pour l'équipage d'un aéronef lorsqu'il doit traiter les pré-alarmes et alarmes engendrées par un équipement d'alerte de collision terrain et/ou d'obstacles au sol.

L'affichage actuellement proposé utilise un ou plusieurs écrans du poste de pilotage spécifiques ou déjà existants tel que l'écran du radar météo dont la fonction première est de montrer le contour horizontal des formations orageuses vers lesquelles se dirige l'aéronef ou tel que l'écran de navigation dont la fonction principale est d'afficher des informations de navigation et/ou du plan de vol de l'aéronef. Il consiste en une image synthétique en deux dimensions du terrain survolé s'apparentant à une carte à courbes de niveau dans laquelle le relief est montré par tranches superposées, affectées de fausses couleurs et/ou de différentes textures et/ou de symboles leur donnant une apparence d'autant plus alertante que le risque de collision est grand.

Classiquement, l'équipage d'un aéronef peut choisir entre deux modes d'affichage, un mode absolu dans lequel les tranches horizontales superposées de terrain sont référencées en altitude par rapport à un repère indépendant de l'aéronef du type niveau de la mer ou autre, cette représentation étant dite TED (acronyme de l'expression anglo-saxonne :"Terrain Elevation Display") et un mode relatif dans lequel les tranches horizontales superposées de terrain sont référencées en altitude par rapport à un repère dépendant de l'aéronef, cette représentation étant dite THD (acronyme de l'expression anglo-saxonne :'Terrain Hasard Display"), les deux modes pouvant être éventuellement combinés.

Dans ces représentations les parties apparentes des tranches de terrain menaçantes, parce qu'elles se trouvent ou vont se trouver à des altitudes proches ou supérieures à celle de l'aéronef, sont affectées de fausses couleurs et/ou de différentes textures et/ou de symboles telles que le jaune pour une tranche horizontale de terrain occupant une gamme d'altitude correspondant à l'altitude courante de l'aéronef et le rouge pour une tranche de terrain occupant une gamme d'altitude supérieure à l'altitude courante de l'aéronef.

L'altitude prise pour référence lors du choix des couleurs des tranches horizontales de terrain dans une représentation relative à l'altitude de l'avion dite, ci-après, "altitude de référence d'affichage" peut être l'altitude instantanée de l'aéronef ou encore celle prédite pour l'aéronef à un instant futur, par exemple de 30 secondes, la prédiction d'altitude étant basée sur l'altitude instantanée de l'aéronef et son vecteur vitesse instantané ou sur l'altitude instantanée de l'aéronef et sa vitesse instantanée de descente verticale. Le fait de prendre pour altitude de référence d'affichage l'altitude prédite à court délai pour l'aéronef permet, lorsque l'aéronef est en descente, de présenter des tranches de terrain comme menaçantes bien qu'elles soient en dessous de l'altitude instantanée de l'aéronef et également, lors d'une montée, de ne pas présenter comme menaçantes des tranches de terrain qui seront normalement survolées en toute sécurité alors qu'elles sont proches ou supérieures à l'altitude instantanée de l'aéronef.

La prise, pour altitude de référence d'affichage, non pas de l'altitude mesurée de l'aéronef mais d'une prédiction de l'altitude qu'il va prendre dans un court instant, permet, de mieux signaler à l'équipage d'un aéronef les vrais risques de collision avec le terrain et/ou des obstacles au sol et éventuellement de donner une meilleure connaissance à l'équipage sur le type de manoeuvre d'évitement à effectuer pour écarter un risque de collision de terrain et/ou d'obstacles au sol signalé par une pré-alarme ou une alarme et sur la nécessité ou non de modifier ladite manoeuvre d'évitement par exemple, par un changement de cap lorsque les possibilités de montée de l'aéronef sont insuffisantes pour un évitement par le haut du terrain et/ou des obstacles au sol menaçants.

Un tel dispositif de visualisation a fait l'objet du brevet français FR 2 773 609 et du brevet américain US 6 088 654 lui correspondant.

Cette prise, pour altitude de référence d'affichage, d'une prédiction de l'altitude que va prendre l'aéronef dans un court instant présente cependant, des limitations quand une alarme de risque de collision avec le terrain et/ou des obstacles au sol est en cours. Notamment, elle ne permet pas de signaler à un équipage d'aéronef l'instant à partir duquel une manoeuvre d'évitement de terrain et/ou d'obstacles au sol entamée de manière appropriée pour traiter un risque de collision avec le terrain et/ou d'obstacles au sol, peut être terminée et à partir duquel la reprise d'un vol normal peut être envisagée. En effet, l'équipage voit disparaître les couches de terrain menaçantes de l'écran de visualisation dès que l'altitude prédite à court terme devient, du fait de la manoeuvre d'évitement en cours, suffisamment élevée par rapport au terrain et/ou aux obstacles au sol survolés.

Comme il ne reçoit pas de signal de fin de manoeuvre d'évitement de la part de l'équipement d'alerte de risques de collision de terrain et/ou d'obstacles au sol, l'équipage d'un aéronef attend d'être nettement au-dessus de l'altitude de sécurité fixée pour la zone survolée pour mettre fin à une manoeuvre d'évitement de terrain et/ou d'obstacles au sol, ce qui concourt à prolonger le temps de vol.

La prise, pour altitude de référence d'affichage, de l'altitude instantanée de l'aéronef permet par contre, à l'équipage d'un aéronef, de se rendre compte facilement de l'instant où l'aéronef atteint une altitude telle qu'un vol normal peut être repris mais ne renseigne pas l'équipage sur l'efficacité d'une manoeuvre d'évitement en cours.

La présente invention a pour but de pallier l'inconvénient précité en donnant, à l'équipage d'un aéronef, par le moyen d'un ou des écrans de bord, une indication claire de l'instant à partir duquel le conflit de terrain peut être considéré comme résolu et la manoeuvre d'évitement peut être terminée.

Elle a pour objet un dispositif d'affichage pour un équipement anticollision terrain embarqué à bord d'aéronef, détectant les risques de collision de l'aéronef avec le terrain et/ou des obstacles au sol par comparaison, d'au moins une enveloppe de protection construite autour de la trajectoire de l'aéronef prédite à court terme, avec une représentation d'une enveloppe du terrain et/ou des obstacles au sol survolés et par détection de l'intrusion, dans la ou lesdites enveloppes de protection, du terrain et/ou des obstacles au sol survolés. Ce dispositif d'affichage affiche, sur un ou plusieurs écrans installés à bord, une image en au moins deux dimensions de l'enveloppe de terrain et/ou des obstacles, sous forme de tranches superposées affectées de fausses couleurs et/ou de différentes textures et/ou de symboles référencés par rapport à une altitude de référence d'affichage. Il est remarquable en ce qu'il comporte des moyens d'ajustement faisant varier l'altitude de référence d'affichage, lorsqu'un risque de collision terrain est détecté, depuis une altitude prédite à court terme pour l'aéronef (prédite a/c alt(t)) vers une altitude liée à l'altitude instantanée (a/c alt(t)) de l'aéronef de sorte que l'écran (6) renseigne sur la possibilité de mettre fin à une manoeuvre d'évitement.

Avantageusement, les moyens d'ajustement de l'altitude de référence d'affichage commutent instantanément, au moment de la détection d'un risque de collision terrain, entre la valeur d'altitude liée à l'altitude prédite à court terme pour l'aéronef et l'altitude instantanée de l'aéronef.

Avantageusement, les moyens d'ajustement de l'altitude de référence d'affichage assurent une transition douce, à partir du moment de la détection d'un risque de collision terrain, entre la valeur d'altitude liée à l'altitude prédite à court terme pour l'aéronef et l'altitude instantanée de l'aéronef.

Avantageusement, les moyens d'ajustement de l'altitude de référence d'affichage donnent à cette dernière, au moment de la détection d'un risque de collision terrain, la valeur de l'altitude prédite à court terme pour l'aéronef.

Avantageusement, lorsque l'aéronef était en montée ou en palier au moment de la détection d'un risque de collision terrain et maintient ou accentue sa montée après la détection du risque de collision terrain, les moyens d'ajustement de l'altitude de référence d'affichage figent la valeur de l'altitude de référence d'affichage à sa valeur du moment.

Avantageusement, lorsque l'aéronef était en montée ou en palier au moment de la détection d'un risque de collision terrain et atténue sa montée après la détection du risque de collision terrain, les moyens d'ajustement de l'altitude de référence d'affichage asservissent la valeur de référence d'affichage à la valeur de l'altitude prédite à court terme pour l'aéronef.

Avantageusement, lorsque l'aéronef était en montée ou en palier au moment de la détection d'un risque de collision terrain et se met à descendre, les moyens d'ajustement de l'altitude de référence d'affichage asservissent la valeur de l'altitude de référence d'affichage à la valeur instantanée de l'altitude de l'aéronef.

Avantageusement, lorsque l'aéronef était en montée ou en palier au moment de la détection d'un risque de collision terrain et que son altitude instantanée devient supérieure à la dernière valeur prise par l'altitude de référence d'affichage, les moyens d'ajustement de l'altitude de référence d'affichage asservissent la valeur de l'altitude de référence d'affichage à la valeur instantanée de l'altitude de l'aéronef.

Avantageusement, lorsque l'aéronef était en descente au moment de la détection d'un risque de collision terrain et accentue sa descente après la détection du risque de collision terrain, les moyens d'ajustement de l'altitude de référence d'affichage asservissent la valeur de l'altitude de référence d'affichage à la valeur de l'altitude prédite à court terme pour l'aéronef.

Avantageusement, lorsque l'aéronef était en descente au moment de la détection d'un risque de collision terrain et atténue sa descente après la détection du risque de collision terrain, les moyens d'ajustement de l'altitude de référence d'affichage asservissent la valeur de référence d'affichage à la valeur de l'altitude prédite à court terme de l'aéronef.

Avantageusement, lorsque l'aéronef était en descente au moment de la détection d'un risque de collision terrain et se met à monter, les moyens d'ajustement de l'altitude de référence d'affichage asservissent la valeur de l'altitude de référence d'affichage à la valeur instantanée de l'altitude de l'aéronef.

Avantageusement, lorsque l'aéronef était en descente au moment de la détection d'un risque de collision terrain et que son altitude instantanée devient inférieure à la dernière valeur prise par l'altitude de référence d'affichage, les moyens d'ajustement de l'altitude de référence d'affichage asservissent la valeur de l'altitude de référence d'affichage à la valeur instantanée de l'altitude de l'aéronef.

Avantageusement, les moyens d'ajustement de l'altitude de référence d'affichage commutent instantanément, au moment de la disparition d'un risque de collision terrain, entre la valeur d'altitude liée à l'altitude prédite à court terme pour l'aéronef et la valeur de l'altitude prédite à court terme pour l'aéronef.

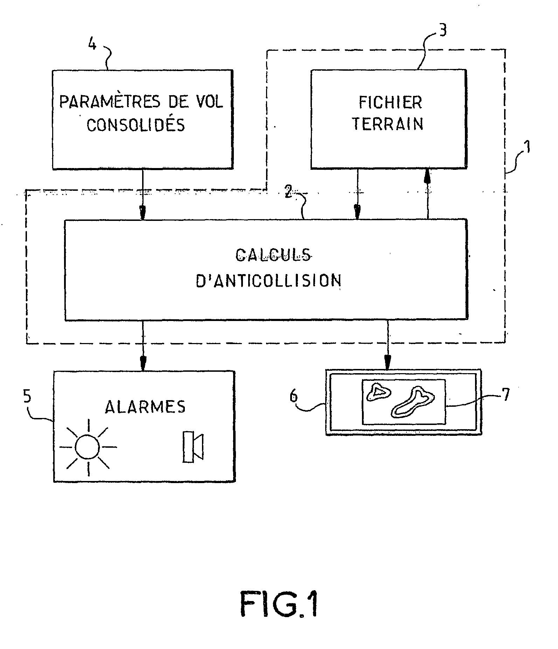

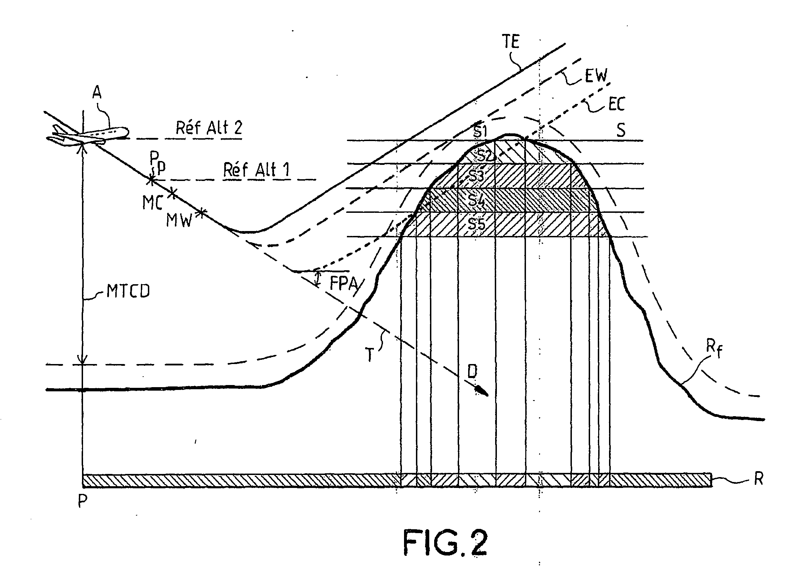

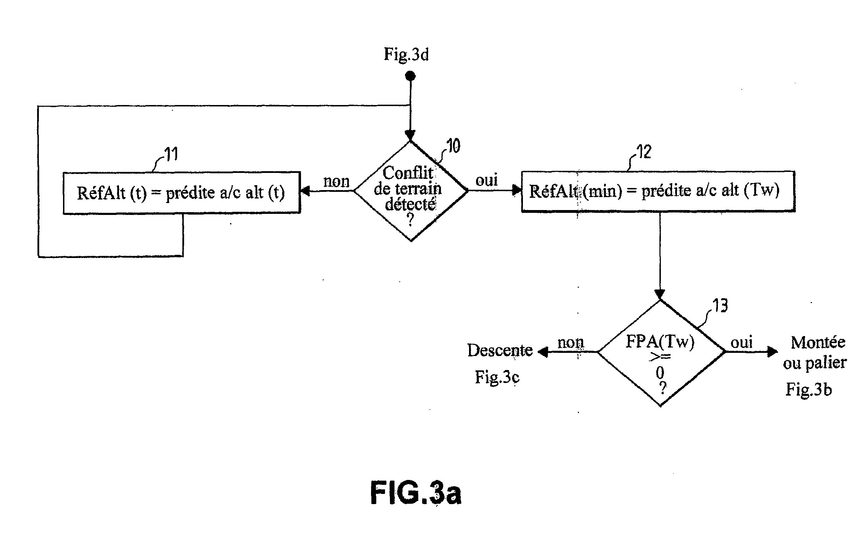

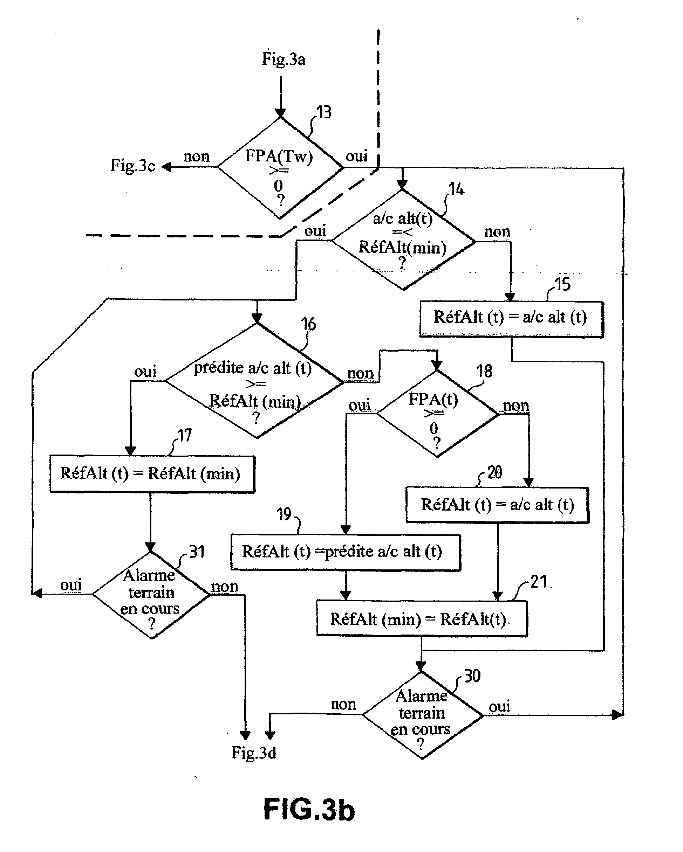

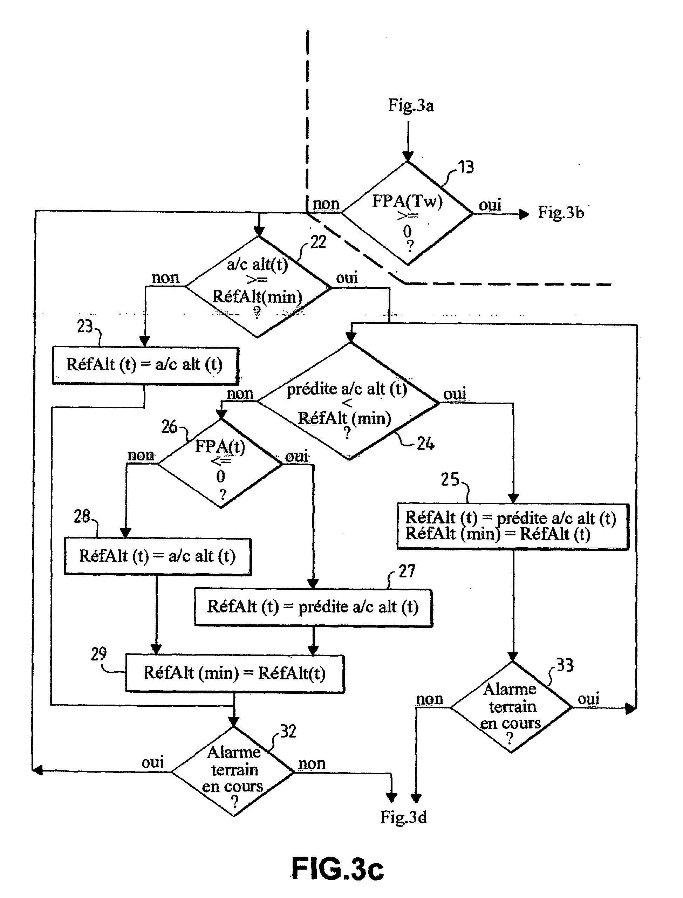

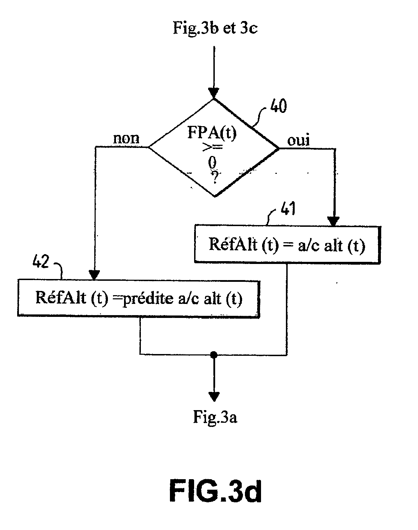

D'autres caractéristiques et avantages de l'invention ressortiront de la description ci-après d'un mode de réalisation donné à titre d'exemple. Cette description sera faite en regard du dessin dans lequel :
- une figure 1 est un schéma de principe d'un équipement anticollision terrain embarqué à bord d'un aéronef en vue de sécuriser son pilotage,
- une figure 2 est une vue en coupe verticale d'un exemple de terrain survolé par un aéronef et des couches de terrain représentées sur l'écran d'un équipement anticollision terrain embarqué à bord, et
- des figures 3a, 3b, 3c et 3d composent un organigramme explicitant un exemple de logique qui peut être suivie par un dispositif d'affichage selon l'invention pour la détermination d'une altitude de référence d'affichage après détection d'un risque de collision terrain et pendant toute la durée de la manoeuvre d'évitement.

La figure 1 montre un équipement d'anticollision terrain 1 dans son environnement fonctionnel à bord d'un aéronef. L'équipement anticollision terrain se compose essentiellement d'un calculateur 2 associé à une base de données altimétriques 3. La base de données altimétriques 3 représentée est embarquée à bord de l'aéronef mais elle peut tout aussi bien être placée au sol et accessible de l'aéronef par radiotransmission. Le calculateur 2 peut être un calculateur spécifique à l'équipement anticollision terrain ou un calculateur partagé avec d'autres tâches comme la gestion de vol ou le pilote automatique. En ce qui concerne l'anticollision terrain, Il reçoit des équipements de navigation 4 de l'aéronef les principaux paramètres de vol dont la position de l'aéronef en latitude, longitude et altitude et la direction et l'amplitude de son vecteur vitesse. A partir de ces paramètres de vol, il détermine à chaque instant, au moins deux volumes de protection dirigés vers l'avant selon une trajectoire future prédite et vers le dessous de l'aéronef, et recherche si ces volumes de protection entrent en contact avec le terrain et/ou les obstacles au sol survolés par comparaison de ces volumes de protection avec une représentation du terrain et/ou des obstacles au sol survolés tirée de la base de données altimétriques 3, tout contact étant considéré comme un risque de collision avec du terrain et/ou des obstacles au sol. Il émet une pré-alarme 5 dès que le plus distant des volumes de protection est touché et une alarme si le plus proche des volumes de protection est également touché et accompagne l'alarme, de la raison de l'alarme et éventuellement d'une indication sur la consigne d'évitement qui convient.

Par ailleurs, pour fournir à l'équipage de l'aéronef, une vision de la situation de l'aéronef par rapport au terrain et, éventuellement, lui faciliter la résolution des risques de collision terrain, l'équipement anticollision terrain 1 affiche sur un écran 6 une carte du terrain survolé faisant ressortir les zones de terrain menaçantes. Cette carte en deux dimensions est constituée d'une représentation par courbes de niveau 7 du terrain survolé avec des fausses couleurs et/ou différentes textures et/ou symboles matérialisant l'ampleur du risque de collision correspondant à chaque tranche de terrain.

Les façons dont sont obtenus les paramètres de vol par les équipements de navigation 4 de l'aéronef ainsi que les traitements faits par le calculateur 2 sur les paramètres de vol et sur les éléments de la base de données altimétriques 3 pour engendrer les pré-alarmes, les alarmes et les consignes d'évitement de terrain ainsi que pour afficher une carte en fausses couleurs, par courbes de niveau, du terrain survolé, ne seront pas détaillés pour ne pas alourdir la description. Pour des précisions à leur sujet, on se rapportera utilement aux brevets précédemment cités (les brevets français FR 2 689 668, FR 2 747 492, FR 2 773 609, FR 2 813 963 et les brevets américains US 5 488 563, US 5 638 282, US 6 088 654, US 6 317 663).

La carte, en deux dimensions, par lignes de niveaux, en fausses couleurs et/ou avec différentes textures et/ou symboles, du terrain survolé affichée par un équipement d'anticollision terrain est référencée, en longitude et en latitude par rapport à la position instantanée de l'aéronef qui est placé sur l'écran de manière à privilégier une zone immédiatement sous l'aéronef se prolongeant dans la direction de déplacement de l'aéronef. En altitude, elle peut être référencée, au choix de l'équipage de l'aéronef, soit par rapport à un point du sol (représentation TED), soit par rapport à l'aéronef (représentation THD), avec, dans les deux cas, des couches de terrain représentées en fausses couleurs et/ou avec différentes textures et/ou symboles choisies en fonction de la distance verticale séparant la couche de terrain considérée de l'aéronef. Dans les deux cas, le tracé de la carte utilise une référence d'altitude relative par rapport à l'aéronef qui sera appelée par la suite "référence d'altitude d'affichage" en abrégé "RefAlt". Cette référence d'altitude d'affichage utilisée, soit uniquement pour le choix des fausses couleurs et/ou des différentes textures et/ou des différents symboles, soit, à la fois pour la délimitation des couches de terrain montrées à l'écran et pour le choix de leurs fausses couleurs et/ou de leurs différentes textures et/ou de leurs différents symboles, est souvent prise égale à l'altitude instantanée de l'aéronef mais elle peut aussi, dans certains cas, être prise égale à une altitude prédite pour l'aéronef dans un court délai, par exemple, 30 secondes, en supposant qu'il conserve le même vecteur vitesse.

La figure 2 est une coupe verticale du relief correspondant à un exemple de carte affichée sur l'écran 6 d'un équipement d'anticollision terrain. La zone de terrain représenté sur l'écran 6 est un secteur orienté selon une radiale passant par le point P de projection au sol de l'aéronef A et suivant au sol la direction D de progression de l'aéronef A. Le terrain est découpé en couches horizontales S1, S2, S3, S4, S5, etc. par exemple, d'une épaisseur, uniformément constante entre couches ou non, fixe ou variable dans le temps, par exemple de 1000 pieds référencées par rapport au niveau RefAlt1 correspondant à l'altitude prédite à court terme pour l'aéronef A supposé arrivé à la position prédite Pp, altitude qui est choisie comme niveau médian de la couche horizontale intermédiaire S3. Les couches horizontales sont colorées en fonction du risque de collision qu'elles présentent, en s'inspirant des couleurs rouge, jaune et verte utilisées par les feux de croisement routier pour signifier un ordre d'arrêt impératif, donc un danger, une permission de franchissement avec précaution, donc un risque et une autorisation de franchissement sans restriction donc une absence de risque.

La couche horizontale intermédiaire S3 qui correspond au contour du relief atteignant l'altitude prédite à court terme pour l'aéronef est colorée dans une couleur attirant moyennement l'attention telle qu'un jaune de densité moyenne signalant la nécessité de prendre des précautions. La couche immédiatement supérieur S2 qui correspond au contour du relief dépassant par exemple de 500 pieds l'altitude prédite à court terme pour l'aéronef est colorée dans une couleur attirant davantage l'attention telle qu'un jaune soutenu signalant la nécessité de renforcer encore les précautions. La couche horizontale supérieure suivante S1 qui correspond au contour du relief dépassant par exemple, de plus de 1500 pieds l'altitude prédite à court terme pour l'aéronef, est colorée dans une couleur attirant encore plus l'attention telle qu'un rouge signalant la nécessité d'une extrême attention. Pour les couches inférieures, la couleur verte par exemple est utilisée avec une intensité de plus en plus faible car elles ne présentent pas de risques de collision à court terme.

L'affichage montre les franges apparentes des différentes couches de terrain. Il apparaît en coupe sur la figure 2 en R sur l'axe des abscisses.

En variante, il est possible d'adopter, comme référence d'altitude d'affichage, le niveau RefAlt2 correspondant à l'altitude instantanée de l'aéronef A. Pour la suite, il suffit de retenir que les couches horizontales de terrain utilisées pour la représentation altimétrique par courbes de niveau du terrain survolé peuvent être définies par rapport à une référence d'altitude absolue (représentation TED) ou par rapport à une référence d'altitude relative liée à l'aéronef (représentation THD) mais que tout particulièrement dans le deuxième cas, le choix des fausses couleurs et/ou des différentes textures et/ou des différents symboles affectées aux différentes couches se fait par rapport à une référence d'altitude relative liée à l'aéronef qui est désignée ici par référence d'altitude d'affichage RefAlt.

La situation représentée à la figure 2 est celle d'un aéronef en descente selon une trajectoire T d'angle de pente FPA (acronyme de l'expression anglo-saxonne "Flight Path Angle" ). Arrivé au point MC, l'équipement anticollision terrain de l'aéronef A engendre une pré-alarme de risque de collision terrain car son enveloppe de protection la plus éloignée adoptée EC commence à rencontrer le relief à une distance inférieure ou égale à une distance MTCD correspondant à une marge minimum de sécurité retenue pour tenir compte des imprécisions de la base des données altimétriques 3 et de la position verticale de l'avion fournie par les senseurs de bord, ainsi que d'une hauteur minimum de survol pour assurer la sécurité.

Arrivé au point MW, l'équipement anticollision terrain de l'aéronef A engendre une alarme de risque de collision terrain car l'enveloppe de protection la plus proche adoptée EW est à son tour à une distance du relief inférieure ou égale à la distance MTCD.

Cette alarme de collision terrain conduit l'équipage de l'aéronef à arrêter la descente et à entamer sans délai une trajectoire d'évitement TE consistant en une remontée à une altitude de sécurité au-dessus des points haut du relief survolé.

Lorsque l'équipage de l'aéronef a choisi ou que le système installé utilise, pour le dispositif d'affichage de l'équipement d'anticollision terrain, une altitude de référence d'affichage RefAlt correspondant à l'altitude prédite à court terme pour l'aéronef, ce qui est naturel puisqu'il s'agit de prévention de risques de collision terrain à court terme, ce choix qui convient bien jusqu'à l'apparition d'un risque de collision terrain et, lors de cette apparition du risque de collision terrain, à l'évaluation de l'efficacité de la manoeuvre d'évitement à mettre en oeuvre, ne permet pas d'utiliser l'écran d'affichage 6 pour connaître l'instant où la manoeuvre d'évitement peut être arrêtée et la route normale reprise sans que le risque de collision terrain ne réapparaisse. En effet, lorsque les couches de terrain affichées passent toutes dans une couleur moins alertante comme le vert, cela signifie seulement que la position prédite à court terme pour l'aéronef passera au-dessus de l'altitude de sécurité si la manoeuvre d'évitement est poursuivie. Pour que l'écran d'affichage 6 puisse permettre à l'équipage de connaître l'instant où la route normale peut être reprise, il faudrait qu'il change l'altitude de référence d'affichage pour lui donner la valeur de l'altitude instantanée de l'aéronef. Un tel changement est difficile à demander à un équipage d'un aéronef à l'instant crucial de résolution d'un risque de collision terrain.

On propose de résoudre ce problème en dotant le dispositif d'affichage altimétrique 6 d'un équipement d'anticollision terrain 1, de moyens automatiques d'ajustement faisant varier l'altitude de référence d'affichage, lorsqu'un risque de collision terrain est détecté, en fonction des pentes de la trajectoire de l'aéronef à l'instant de détection du risque de collision terrain et à l'instant présent, et de sa valeur instantanée par rapport à l'altitude instantanée de l'aéronef et/ou par rapport à une altitude prédite pour l'aéronef, dans une plage mobile délimitée par l'altitude de l'aéronef et l'altitude altitude prédite à court terme pour l'aéronef à l'instant de détection du risque de collision terrain.

L'organigramme illustré par les figures 3a, 3b, 3c et 3d donne un exemple de procédé utilisable par les moyens d'ajustement pour faire évoluer, avantageusement d'une manière automatique et progressive, au cours d'une manoeuvre d'évitement du relief, la valeur de l'altitude de référence d'affichage, depuis la valeur de l'altitude prédite à court terme pour l'aéronef jusqu'à la valeur de l'altitude instantanée de l'aéronef, afin que l'écran du dispositif d'affichage 6 de l'équipement anticollision terrain renseigne également sur la possibilité de mettre fin à la manoeuvre d'évitement.

Ce procédé comporte différentes étapes :
La première étape montrée à la figure 3a consiste à vérifier en 10 si un conflit de terrain est détecté par l'équipement anticollision terrain.

Si aucun conflit de terrain n'est détecté par l'équipement anticollision terrain, l'altitude de référence d'affichage "RéfAlt(t)" est prise égale à l'altitude prédite à court terme pour l'aéronef "prédite a/c alt(t)" (rectangle 11). Puis il y a un rebouclage sur l'entrée pour surveiller la détection éventuelle d'un conflit de terrain.

Si un conflit de terrain est détecté par l'équipement anticollision terrain, une variable auxiliaire d'altitude "RéfAlt(min)" représentant une valeur minimun de l'altitude de référence est mise à jour à la valeur de l'altitude prédite à court terme de l'aéronef au moment de la détection du risque de collision terrain "prédite a/c alt(Tw)" (rectangle 12).

La deuxième étape également illustrée dans la figure 3a consiste, lorsqu'un risque de collision terrain a été détecté, à distinguer entre deux attitudes de vol, une première correspondant à un aéronef en montée ou en palier et une deuxième correspondant à un aéronef en descente. Cette distinction se fait par vérification en 13 du signe de l'angle de pente du vecteur de vitesse de l'aéronef au moment de la détection du risque de collision terrain "FPA(Tw)" et mène à deux branches distinctes de traitement.

### Première branche illustrée dans la figure 3b concernant un aéronef en montée ou en palier

Lorsque l'aéronef est en montée ou en palier au moment de la détection d'un risque de collision terrain, la deuxième étape est suivie d'une étape de comparaison de l'altitude instantanée de l'aéronef "a/c alt(t)" avec la variable auxiliaire d'altitude "RéfAlt(min)" (losange 14).

Tant que l'altitude instantanée de l'aéronef est supérieure à la valeur de la variable auxiliaire d'altitude (a/c alt(t) > RéfAlt(min)) et tant que l'alarme due à la détection d'un risque de collision terrain est en cours (losange 30), l'altitude de référence d'affichage "RéfAlt(t)" est prise égale à la valeur de l'altitude instantanée de l'aéronef "a/c alt(t)" (rectangle 15).

Tant que l'altitude instantanée est inférieure ou égale à la valeur de la variable auxiliaire d'altitude (a/c alt(t) <= RéfAlt(min)) et tant que l'alarme due à la détection d'un risque de collision terrain est en cours (losange 31), l'étape de comparaison de l'altitude instantanée de l'aéronef "a/c alt(t)" avec la variable auxiliaire d'altitude "RéfAlt(min)" (losange 14) est complétée par une étape de surveillance du taux de montée de l'aéronef.

Cette étape de surveillance du taux de montée de l'aéronef consiste en une comparaison en 16 de la variable auxiliaire d'altitude "RéfAlt(min) avec l'altitude prédite à court terme pour l'aéronef "prédite a/c alt(t)" qui est toujours supérieure à l'altitude minimum atteinte par l'altitude prédite à court terme pour l'aéronef si l'aéronef a augmenté son taux de montée.

Tant que l'altitude prédite à court terme pour l'aéronef "prédite a/c alt(t)" est supérieure à l'altitude "RéfAlt(min) (prédite a/c alt(t) ≥ RéfAlt(min)) et tant que l'alarme due à la détection d'un risque de collision terrain est en cours (losange 31), l'altitude de référence d'affichage "RéfAlt(t) est prise égale à la variable auxiliaire d'altitude "RéfAlt(min)" (rectangle 17) et la comparaison en 16 de l'altitude prédite à court terme pour l'aéronef "prédite a/c alt(t)" avec la variable auxiliaire d'altitude "RéfAlt(min)" réitérée.

Tant que l'altitude prédite à court terme pour l'aéronef "prédite a/c alt(t)" est inférieure ou égale à l'altitude "RéfAlt(min) (prédite a/c alt(t) < RéfAlt(min)) et tant que l'alarme due à la détection d'un risque de collision terrain est en cours (losange 30), l'étape de surveillance du taux de montée de l'aéronef (lozange 16) est complétée par une étape de vérification de la poursuite de la montée de l'aéronef.

Cette étape de vérification de la poursuite de la montée de l'aéronef consiste à vérifier en 18 le signe de l'angle de pente du vecteur vitesse de l'aéronef FPA(t).

Si l'aéronef est toujours en montée ou en palier (FPA(t) >= 0), l'altitude de référence d'affichage "RéfAlt(t)" est prise égale à l'altitude prédite à court terme pour l'aéronef "prédite a/c alt(t)" (rectangle 19).

Si l'aéronef est en descente (FPA(t) < 0), l'altitude de référence d'affichage "RéfAlt(t)" est prise égale à la valeur de l'altitude instantanée de l'aéronef "a/c alt(t)" (rectangle 20).

Dans les deux cas, la nouvelle valeur adoptée pour l'altitude de référence d'affichage "RéfAlt(t)" est utilisée pour mettre à jour la variable auxiliaire d'altitude "RéfAlt(min)" (rectangle 21) avant de revenir à l'étape de comparaison de l'altitude instantanée de l'aéronef "a/c alt(t)" avec la variable auxiliaire d'altitude "RéfAlt(min)" (losange 14) tant que l'alarme due à la détection d'un risque de collision terrain est en cours (losange 30).

La cessation de l'alarme de collision terrain provoque une sortie des boucles d'ajustement de l'altitude de référence d'affichage "RéfAlt(t)" (losanges 30 et 31) et l'ajustement de la valeur de l'altitude de référence d'affichage "RéfAlt(t)" soit à celle de l'altitude prédite à court terme pour l'aéronef "prédite a/c alt(t)" si l'aéronef est en descente, soit à celle de l'altitude instantanée de l'aéronef "a/c alt(t)" si l'aéronef est en palier ou en montée.

Ce choix en l'absence de détection de conflit de terrain fait l'objet de la portion d'organigramme logique montrée à la figure 3d qui comporte une étape de détection du signe de la pente instantanée "FPA(t)" de la trajectoire de l'aéronef (losange 40) suivie de l'adoption, pour l'altitude de référence d'affichage "RéfAlt(t)", de la valeur de l'altitude instantanée de l'aéronef "a/c alt(t)" dans le cas d'une pente instantanée "FPA(t)" positive ou nulle (rectangle 41) ou de la valeur de l'altitude prédite à court terme "prédite a/c alt(t)" dans le cas d'une pente instantanée "FPA(t)" négative.

Ce choix fait, il y a un rebouclage sur l'entrée (figure 3b) pour surveiller la détection éventuelle d'un conflit terrain.

### Deuxième branche illustrée dans la figure 3c concernant un aéronef en descente

Lorsque l'aéronef est en descente au moment de la détection d'un risque de collision terrain, la deuxième étape est suivie d'une étape de comparaison de l'altitude instantanée de l'aéronef "a/c alt(t)" avec la variable auxiliaire d'altitude "RéfAlt(min)" (losange 22).

Tant que l'aéronef est en descente avec une altitude instantanée inférieure à la valeur de la variable auxiliaire d'altitude (a/c alt(t) < RéfAlt(min)) et tant que l'alarme due à la détection d'un risque de collision terrain est en cours (losange 32), l'altitude de référence d'affichage "RéfAlt(t)" est prise égale à la valeur de l'altitude instantanée de l'aéronef "a/c alt(t)" (rectangle 23).

Tant que l'aéronef est en descente avec une altitude instantanée supérieure ou égale à la valeur de la variable auxiliaire d'altitude (a/c alt(t) >= RéfAlt(min)) et tant que l'alarme due à la détection d'un risque de collision terrain est en cours (losange 32), l'étape de comparaison de l'altitude instantanée de l'aéronef "a/c alt(t)" avec la variable auxiliaire d'altitude "RéfAlt(min)" (losange 22) est complétée par une étape de surveillance du taux de descente de l'aéronef.

Cette étape de surveillance du taux de descente de l'aéronef consiste en une comparaison en 24 de la variable auxiliaire d'altitude "RéfAlt(min) avec l'altitude prédite à court terme pour l'aéronef "prédite a/c alt(t)" qui est toujours inférieure à l'altitude minimum atteinte par l'altitude prédite à court terme pour l'aéronef si l'aéronef a augmenté son taux de descente.

Tant que l'altitude prédite à court terme pour l'aéronef "prédite a/c alt(t)" est inférieure ou égale à l'altitude "RéfAlt(min) (prédite a/c alt(t) =< RéfAlt(min)) et tant que l'alarme due à la détection d'un risque de collision terrain est en cours (losange 33), l'altitude de référence d'affichage "RéfAlt(t) est prise égale à la l'altitude prédite à court terme pour l'aéronef "prédite a/c alt(t)" tandis que la variable auxiliaire d'altitude "RéfAlt(min)" est mise à jour à la nouvelle valeur adoptée pour l'altitude de référence d'affichage "RéfAlt(t)" (rectangle 25) et la comparaison en 24 de l'altitude prédite à court terme pour l'aéronef "prédite a/c alt(t)" avec la variable auxiliaire d'altitude "RéfAlt(min)" réitérée.

Tant que l'altitude prédite à court terme pour l'aéronef "prédite a/c alt(t)" est supérieure à l'altitude "RéfAlt(min) (prédite a/c alt(t) > RéfAlt(min)) et tant que l'alarme due à la détection d'un risque de collision terrain est en cours (losange 32), l'étape de surveillance du taux de descente de l'aéronef (lozange 24) est complétée par une étape de vérification de la poursuite de la descente de l'aéronef.

Cette étape de vérification de la poursuite de la descente de l'aéronef consiste à vérifier en 26 le signe de l'angle de pente du vecteur vitesse de l'aéronef FPA(t).

Si l'aéronef est toujours en descente ou en palier (FPA(t) <= 0), l'altitude de référence d'affichage "RéfAlt(t)" est prise égale à l'altitude prédite à court terme pour l'aéronef "prédite a/c alt(t)" (rectangle 27).

Si l'aéronef est en montée (FPA(t) > 0), l'altitude de référence d'affichage "RéfAlt(t)" est prise égale à la valeur de l'altitude instantanée de l'aéronef "a/c alt(t)" (rectangle 28).

Dans les deux cas, la nouvelle valeur adoptée pour l'altitude de référence d'affichage "RéfAlt(t)" est utilisée pour mettre à jour la variable auxiliaire d'altitude "RéfAlt(min)" (rectangle 29) avant de revenir à l'étape de comparaison de l'altitude instantanée de l'aéronef "a/c alt(t)" avec la variable auxiliaire d'altitude "RéfAlt(min)" (losange 22) tant que l'alarme due à la détection d'un risque de collision terrain est en cours (losange 32).

La cessation de l'alarme de collision terrain provoque une sortie des boucles d'ajustement de l'altitude de référence d'affichage "RéfAlt(t)" (losanges 32 et 33) et l'ajustement de la valeur de l'altitude de référence d'affichage "RéfAlt(t)" soit à celle de l'altitude prédite à court terme pour l'aéronef "prédite a/c alt(t)" (rectangle 11) si l'aéronef est en descente, soit à celle de l'altitude instantanée de l'aéronef "a/c alt(t)" si l'aéronef est en palier ou en montée en suivant la portion d'organigramme logique qui est montrée à la figure 3d et qui a déjà été décrite.

Ce choix fait, il y a un rebouclage sur l'entrée (figure 3b) pour surveiller la détection éventuelle d'un conflit terrain.

Périodiquement au début de certains cycles de rafraîchissement de l'image montrée sur l'écran d'affichage, la valeur de l'altitude de référence prise en compte pour la génération de l'image est mise à jour à la valeur fournie par les moyens d'ajustement de l'altitude de référence d'affichage.

Les moyens d'ajustement de l'altitude de référence d'affichage peuvent suivre d'autres processus logiques que celui qui vient d'être donné en exemple. Ils peuvent même suivrent un processus logique très simplifié se réduisant à commuter l'altitude de référence d'affichage, soit au moment de la détection d'un risque de collision terrain, d'une valeur liée à l'altitude prédite à court terme pour l'aéronef, à la valeur de l'altitude instantanée de l'aéronef, soit au moment de la disparition du risque de collision terrain, d'une valeur liée à l'altitude instantanée de l'aéronef à la valeur de l'altitude prédite à court terme pour l'aéronef.

Les moyens d'ajustement de l'altitude de référence d'affichage peuvent également effectuer une commutation douce à partir du moment de la disparition d'un risque de collision terrain, entre la valeur de l'altitude liée à l'altitude instantanée (a/c alt(t)) de l'aéronef et la valeur de l'altitude prédite à court terme pour l'aéronef (prédite a/c alt(Tw)).

Lorsqu'ils procèdent à la détermination de la valeur instantanée de l'altitude de référence d'affichage en mettant en oeuvre le procédé qui vient d'être décrit, les moyens d'ajustement de l'altitude de référence d'affichage assurent, une transition douce, sans à-coups visibles sur l'écran, entre un affichage de carte référencée par rapport à l'altitude prévue à court terme pour l'aéronef, ce qui est bien adapté pour un équipement anticollision terrain en l'absence de détection de risque de collision, et un affichage de carte référencée par rapport à l'altitude instantanée de l'aéronef mieux adapté pour la fin de résolution par évitement, d'un risque de collision terrain.

Les moyens d'ajustement de la valeur instantanée de l'altitude de référence d'affichage peuvent être réalisés sous la forme d'un circuit logique spécifique ou au moyen d'un logiciel dont l'exécution est confiée au calculateur de l'équipement anticollision terrain.

## Revendications

1. Dispositif d'affichage pour un équipement anticollision terrain (1) embarqué à bord d'aéronef (A) détectant les risques de collision de l'aéronef (A) avec le terrain (Rf) et/ou des obstacles au sol par comparaison, d'au moins une enveloppe de protection (EC, EW) construite autour de la trajectoire de l'aéronef prédite à court terme, avec une représentation d'une enveloppe du terrain et/ou des obstacles au sol survolés et par détection de l'intrusion, dans la ou lesdites enveloppes de protection, du terrain et/ou des obstacles au sol survolés, ledit dispositif d'affichage affichant, sur un ou des écrans (6) installés à bord, une image représentant en au moins deux dimensions de l'enveloppe du terrain et/ou des obstacles, sous forme de tranches superposées (S1, S2, S3, S4, S5) affectées de fausses couleurs et/ou de différentes textures et/ou de symboles référencés par rapport à une altitude de référence d'affichage (RéfAlt) correspondant à une altitude prédite à court terme pour l'aéronef (prédite a/c alt(t)), et
étant **caractérisé en ce qu'**il comporte : des moyens d'ajustement faisant varier l'altitude de référence d'affichage (RéfAlt(t)), lorsqu'un risque de collision terrain est détecté, depuis une altitude prédite à court terme pour l'aéronef (prédite a/c alt(t)) vers une altitude liée à l'altitude instantanée (a/c alt(t)) de l'aéronef de sorte que l'écran (6) renseigne sur la possibilité de mettre fin à une manoeuvre d'évitement.

2. Dispositif selon la revendication 1, **caractérisé en ce que** les moyens d'ajustement de l'altitude de référence d'affichage commutent instantanément, au moment de la détection d'un risque de collision terrain, entre la valeur de l'altitude liée à l'altitude prédite à court terme pour l'aéronef (prédite a/c alt(Tw)) et l'altitude instantanée (a/c alt(t)) de l'aéronef.

3. Dispositif selon la revendication 2, **caractérisé en ce que** la commutation se déclenche au début d'un prochain cycle de rafraîchissement de l'image sur l'écran ou est affichée l'image.

4. Dispositif selon la revendication 1, **caractérisé en ce que** les moyens d'ajustement de l'altitude de référence d'affichage assurent une transition douce, à partir du moment de la détection d'un risque de collision terrain, entre la valeur de l'altitude prédite à court terme pour l'aéronef (prédite a/c alt(Tw)) et l'altitude liée à l'altitude instantanée (a/c alt(t)) de l'aéronef.

5. Dispositif selon la revendication 1, **caractérisé en ce que** les moyens d'ajustement de l'altitude de référence d'affichage donnent initialement à cette dernière, au moment de la détection d'un risque de collision terrain, la valeur de l'altitude prédite à court terme pour l'aéronef (prédite a/c alt(Tw)).

6. Dispositif selon la revendication 1, **caractérisé en ce que**, lorsque l'aéronef était en montée ou en palier au moment de la détection d'un risque de collision terrain et maintient ou accentue sa montée après la détection du risque de collision terrain, les moyens d'ajustement de l'altitude de référence d'affichage figent la valeur de l'altitude de référence d'affichage (RéfAlt(t)) à sa valeur du moment (RéfAlt(min)).

7. Dispositif selon la revendication 1, **caractérisé en ce que**, lorsque l'aéronef était en montée ou en palier au moment de la détection d'un risque de collision terrain et atténue sa montée après la détection du risque de collision terrain, les moyens d'ajustement de l'altitude de référence d'affichage asservissent la valeur de référence d'affichage (RéfAlt(t)) à la valeur de l'altitude prédite à court terme pour l'aéronef (prédite a/c alt(t)).

8. Dispositif selon la revendication 1, **caractérisé en ce que**, lorsque l'aéronef était en montée ou en palier au moment de la détection d'un risque de collision terrain et se met à descendre, les moyens d'ajustement de l'altitude de référence d'affichage asservissent la valeur de l'altitude de référence d'affichage (RéfAlt(t)) à la valeur instantanée de l'altitude de l'aéronef (a/c alt(t)).

9. Dispositif selon la revendication 1, **caractérisé en ce que**, lorsque l'aéronef était en montée ou en palier au moment de la détection d'un risque de collision terrain et que son altitude instantanée (a/c alt(t)) devient supérieure à la dernière valeur prise par l'altitude de référence d'affichage (RéfAlt(min)), les moyens d'ajustement de l'altitude de référence d'affichage asservissent la valeur de l'altitude de référence d'affichage (RéfAlt(t)) à la valeur instantanée de l'altitude de l'aéronef (a/c alt(t)).

10. Dispositif selon la revendication 1, **caractérisé en ce que**, lorsque l'aéronef était en descente au moment de la détection d'un risque de collision terrain et accentue sa descente après la détection du risque de collision terrain, les moyens d'ajustement de l'altitude de référence d'affichage asservissent la valeur de l'altitude de référence d'affichage (RéfAlt(t)) à la valeur de l'altitude prédite à court terme pour l'aéronef (prédite a/c alt(t)).

11. Dispositif selon la revendication 1, **caractérisé en ce que**, lorsque l'aéronef était en descente au moment de la détection d'un risque de collision terrain et atténue sa descente après la détection du risque de collision terrain, les moyens d'ajustement de l'altitude de référence d'affichage asservissent la valeur de référence d'affichage (Réfalt(t)) à la valeur de l'altitude prédite à court terme de l'aéronef (prédite a/c alt(t)).

12. Dispositif selon la revendication 1, **caractérisé en ce que**, lorsque l'aéronef était en descente au moment de la détection d'un risque de collision terrain et se met à monter, les moyens d'ajustement de l'altitude de référence d'affichage asservissent la valeur de l'altitude de référence d'affichage (RéfAlt(t) à la valeur instantanée de l'altitude de l'aéronef (a/c alt(t)).

13. Dispositif selon la revendication 1, **caractérisé en ce que**, lorsque l'aéronef était en descente au moment de la détection d'un risque de collision terrain et que son altitude instantanée (a/c alt(t)) devient inférieure à la dernière valeur prise par l'altitude de référence d'affichage (RéfAlt(min)), les moyens d'ajustement de l'altitude de référence d'affichage asservissent la valeur de l'altitude de référence d'affichage (RéfAlt(t)) à la valeur instantanée de l'altitude de l'aéronef (a/c alt(t)).

14. Dispositif selon la revendication 1, **caractérisé en ce que** les moyens d'ajustement de altitude de référence d'affichage commutent instantanément, au moment de la disparition d'un risque de collision terrain, entre la valeur de l'altitude liée à l'altitude instantanée (a/c alt(t)) de l'aéronef et la valeur de l'altitude prédite à court terme pour l'aéronef (prédite a/c alt(Tw)).

15. Dispositif selon la revendication 14, **caractérisé en ce que** la commutation se déclenche au début d'un prochain cycle de rafraîchissement de l'image sur l'écran ou est affichée l'image.

16. Dispositif selon la revendication 1, **caractérisé en ce que** les moyens d'ajustement de l'altitude de référence d'affichage permettent une commutation douce à partir du moment de la disparition d'un risque de collision terrain, entre la valeur de l'altitude liée à l'altitude instantanée (a/c alt(t)) de l'aéronef et la valeur de l'altitude prédite à court terme pour l'aéronef (prédite a/c alt(Tw)).

## Patentansprüche

1. Anzeigevorrichtung für eine Onboard-Terrain-Antikollisonsausrüstung (1) an Bord eines Luftfahrzeugs (A), die die Kollisionsrisiken des Luftfahrzeugs (A) mit dem Terrain (Rf) und/oder Hindernissen am Boden durch Vergleich mindestens einer um die kurzfristig vorhergesagte Flugbahn des Luftfahrzeugs konstruierten Schutzhülle (EC, EW) mit einer Darstellung einer Terrainhülle und/oder der am Boden überflogenen Hindernisse und durch Ermittlung der Intrusion des Terrains und/oder der am Boden überflogenen Hindernisse in die Schutzhülle(n) ermittelt, wobei die Anzeigevorrichtung auf einem an Bord installierten Bildschirm oder installierten Bildschirmen (6) ein Bild anzeigt, das die Terrainhülle und/oder Hindernisse in mindestens zwei Dimensionen in Form von übereinanderliegenden Schichten (S1, S2, S3, S4, S5) in Falschfarben und/oder unterschiedlichen Texturen und/oder Symbolen darstellt, die im Verhältnis zu einer Anzeigereferenzhöhe (RéfAlt) in Beziehung gesetzt werden, die einer für das Flugzeug kurzfristig vorhergesagten Höhe (prédite a/c alt(t) entspricht, und
die **dadurch gekennzeichnet ist, dass** sie Anpassungsmittel aufweist, die, wenn ein Terrainkollisionsrisiko ermittelt wird, die Anzeigereferenzhöhe (RefAlt(t)) von einer kurzfristig für das Luftfahrzeug vorhergesagten Höhe (prédite a/c alt(t)) zu einer mit der momentanen Höhe (a/c alt(t)) des Luftfahrzeugs verbundenen Höhe derart verändern, dass der Bildschirm (6) über die Möglichkeit der Beendigung eines Vermeidungsmanövers unterrichtet.

2. Vorrichtung nach Anspruch 1, **dadurch gekennzeichnet, dass** die Anpassungsmittel der Anzeigereferenzhöhe im Augenblick der Ermittlung eines Terrainkollisionsrisikos sofort zwischen dem mit der kurzfristig für das Luftfahrzeug vorhergesagten Höhe verbundenen Höhenwert (prédite a/c alt(Tw)) und der momentanen Höhe (a/c alt(t)) des Luftfahrzeugs umschalten.

3. Vorrichtung nach Anspruch 2, **dadurch gekennzeichnet, dass** die Umschaltung am Anfang eines nächsten Bildauffrischungszyklus auf dem Bildschirm erfolgt, auf dem das Bild angezeigt wird.

4. Vorrichtung nach Anspruch 1, **dadurch gekennzeichnet, dass** die Anpassungsmittel der Anzeigereferenzhöhe ab dem Moment der Ermittlung eines Terrainkollisionsrisikos einen sanften Übergang zwischen dem kurzfristig für das Luftfahrzeug vorhergesagten Höhenwert (prédite a/c alt(Tw)) und der mit der momentanen Höhe (a/c alt(t)) des Luftfahrzeugs verbundenen Höhe gewährleisten.

5. Vorrichtung nach Anspruch 1, **dadurch gekennzeichnet, dass** die Anpassungsmittel der Anzeigereferenzhöhe dieser zunächst im Augenblick der Ermittlung eines Terrainkollisionsrisikos den kurzfristig für das Luftfahrzeug vorhergesagten Höhenwert (prédite a/c alt(Tw)) geben.

6. Vorrichtung nach Anspruch 1, **dadurch gekennzeichnet, dass**, wenn das Luftfahrzeug im Augenblick der Ermittlung eines Terrainkollisionsrisikos im Steigflug oder im Horizontalflug ist oder seinen Steigflug nach der Ermittlung des Terrainkollisionsrisikos fortsetzt oder verstärkt, die Anpassungsmittel der Anzeigereferenzhöhe den Wert der Anzeigereferenzhöhe (RefAlt(t)) auf seinen momentanen Wert (RéfAlt(min)) festhalten.

7. Vorrichtung nach Anspruch 1, **dadurch gekennzeichnet, dass**, wenn das Luftfahrzeug im Augenblick der Ermittlung eines Terrainkollisionsrisikos im Steigflug oder im Horizontalflug ist und seinen Steigflug nach der Ermittlung des Terrainkollisionsrisikos abschwächt, die Anpassungsmittel den Anzeigereferenzwert (RefAlt(t)) dem kurzfristig für das Luftfahrzeug vorhergesagten Höhenwert (prédite a/c alt(t)) unterordnen.

8. Vorrichtung nach Anspruch 1, **dadurch gekennzeichnet, dass**, wenn das Luftfahrzeug im Augenblick der Ermittlung eines Terrainkollisionsrisikos im Steigflug oder im Horizontalflug ist und in den Sinkflug übergeht, die Anpassungsmittel der Anzeigereferenzhöhe den Wert der Anzeigereferenzhöhe (RefAlt(t)) dem momentanen Höhenwert des Luftfahrzeugs (a/c alt(t)) unterordnen.

9. Vorrichtung nach Anspruch 1, **dadurch gekennzeichnet, dass**, wenn das Luftfahrzeug im Augenblick der Ermittlung eines Terrainkollisionsrisikos im Steigflug oder im Horizontalflug ist und seine momentane Höhe (a/c alt(t)) höher als der letzte Wert, der als Anzeigereferenzhöhe (RéfAlt(min)) ermittelt wurde, wird, die Anpassungsmittel der Anzeigereferenzhöhe den Wert der Anzeigereferenzhöhe (RefAlt(t)) dem momentanen Höhenwert (a/c alt(t)) des Luftfahrzeugs unterordnen.

10. Vorrichtung nach Anspruch 1, **dadurch gekennzeichnet, dass**, wenn das Luftfahrzeug im Augenblick der Ermittlung eines Terrainkollisionsrisikos im Sinkflug ist und seinen Sinkflug nach der Ermittlung des Terrainkollisionsrisikos verstärkt, die Anpassungsmittel der Anzeigereferenzhöhe den Anzeigereferenzhöhenwert (RefAlt(t)) dem kurzfristig für das Luftfahrzeug vorhergesagten Höhenwert (prédite a/c alt(t)) unterordnen.

11. Vorrichtung nach Anspruch 1, **dadurch gekennzeichnet, dass**, wenn das Luftfahrzeug im Augenblick der Ermittlung eines Terrainkollisionsrisikos im Sinkflug ist und seinen Sinkflug nach der Ermittlung des Terrainkollisionsrisikos abschwächt, die Anpassungsmittel der Anzeigereferenzhöhe den Anzeigereferenzwert (RefAlt(t)) dem kurzfristig für das Luftfahrzeug vorhergesagten Höhenwert (prédite a/c alt(t)) unterordnen.

12. Vorrichtung nach Anspruch 1, **dadurch gekennzeichnet, dass**, wenn das Luftfahrzeug im Augenblick der Ermittlung eines Terrainkollisionsrisikos im Sinkflug ist und zu steigen beginnt, die Anpassungsmittel der Anzeigereferenzhöhe den Anzeigereferenzhöhenwert (RefAlt(t)) dem momentanen Höhenwert des Luftfahrzeugs (a/c alt(t)) unterordnen.

13. Vorrichtung nach Anspruch 1, **dadurch gekennzeichnet, dass**, wenn das Luftfahrzeug im Augenblick der Ermittlung eines Terrainkollisionsrisikos im Sinkflug ist und seine momentane Höhe (a/c alt(t)) niedriger als der letzte Wert, der als Anzeigereferenzhöhe (RéfAlt(min)) ermittelt wurde, wird, die Anpassungsmittel der Anzeigereferenzhöhe den Anzeigereferenzhöhenwert (RefAlt(t)) dem momentanen Höhenwert (a/c alt (t)) des Luftfahrzeugs unterordnen.

14. Vorrichtung nach Anspruch 1, **dadurch gekennzeichnet, dass** die Anpassungsmittel der Anzeigereferenzhöhe im Augenblick des Verschwindens eines Terrainkollisionsrisikos sofort zwischen dem mit der momentanen Höhe (a/c alt(t)) des Luftfahrzeugs verbundenen Höhewert und dem kurzfristig für das Luftfahrzeug vorhergesagten Höhenwert (prédite a/c alt(Tw)) umschalten.

15. Vorrichtung nach Anspruch 14, **dadurch gekennzeichnet, dass** die Umschaltung am Anfang eines nächsten Bildauffrischungszyklus auf dem Bildschirm erfolgt, auf dem das Bild angezeigt wird.

16. Vorrichtung nach Anspruch 1, **dadurch gekennzeichnet, dass** die Anpassungsmittel der Anzeigereferenzhöhe ab dem Augenblick des Verschwindens eines Terrainkollisionsrisikos eine sanfte Umschaltung zwischen dem mit der momentanen Höhe des Luftfahrzeugs verbundenen Höhenwert (a/c alt(t)) und dem kurzfristig für das Luftfahrzeug vorhergesagten Höhenwert (prédite a/c alt(Tw)) ermöglichen.

## Claims

1. A display device (1) for an item of terrain anti-collision equipment on board an aircraft (A) detecting the risks of collision of said aircraft (A) with the terrain (Rf) and/or with ground obstacles by comparing at least one protection envelope (EC, EW), built around the short-term predicted trajectory of said aircraft, with a representation of an envelope of the terrain and/or of the ground obstacles overflown, and by detecting the intrusion, in the one or more protection envelopes, of the terrain and/or of the ground obstacles overflown, said display device displaying, on one or more on-board screens (6), an image representing the envelope of the terrain and/or the obstacles in at least two dimensions, in the form of superposed slices (S1, S2, S3, S4, S5) assigned false colours and/or different textures and/or symbols referenced relative to a reference display altitude (RéfAlt) corresponding to a short-term predicted altitude for said aircraft (prédite a/c alt(t)), and
being **characterised in that** it comprises: adjustment means varying the reference display altitude (RéfAlt(t)), when a risk of terrain collision is detected, from a short-term predicted altitude (prédite a/c alt(t)) for said aircraft to an altitude associated with the instantaneous altitude (a/c alt(t)) of said aircraft so that said screen (6) provides information relating to the possibility of ending an avoidance manoeuvre.

2. The device according to claim 1, **characterised in that** said means for adjusting the reference display altitude instantaneously switch, when a risk of terrain collision is detected, between the value of the altitude associated with the short-term predicted altitude for said aircraft (prédite a/c alt(Tw)) and the instantaneous altitude (a/c alt(t)) of said aircraft.

3. The device according to claim 2, **characterised in that** the switching is triggered at the start of the next cycle for refreshing the image on the screen where the image is displayed.

4. The device according to claim 1, **characterised in that** said means for adjusting the reference display altitude provide a soft transition, from the time of the detection of a risk of terrain collision, between the short-term predicted altitude value for said aircraft (prédite a/c alt(Tw)) and the altitude associated with the instantaneous altitude (a/c alt(t)) of said aircraft.

5. The device according to claim 1, **characterised in that** said means for adjusting the reference display altitude initially provide said altitude, when a risk of terrain collision is detected, with the short-term predicted altitude value for said aircraft (prédite a/c alt(Tw)).

6. The device according to claim 1, **characterised in that**, when said aircraft is climbing or levelling at the time of the detection of a risk of terrain collision and maintains or accentuates its ascent after the detection of the risk of terrain collision, said means for adjusting the reference display altitude fix the value of the reference display altitude (RéfAlt(t)) to its value at the time (RéfAlt(min)).

7. The device according to claim 1, **characterised in that**, when said aircraft is climbing or levelling at the time of the detection of a risk of terrain collision and attenuates its ascent after the detection of the risk of terrain collision, said means for adjusting the reference display altitude slave the reference display value (RéfAlt(t)) to the value of the short-term predicted altitude for said aircraft (prédite a/c alt(t)).

8. The device according to claim 1, **characterised in that**, when said aircraft is climbing or levelling at the time of the detection of a risk of terrain collision and begins to descend, said means for adjusting the reference display altitude slave the value of the reference display altitude (RéfAlt(t)) to the instantaneous value of the altitude of said aircraft (a/c alt(t)).

9. The device according to claim 1, **characterised in that**, when said aircraft is climbing or levelling at the time of the detection of a risk of terrain collision and its instantaneous altitude (a/c alt(t)) becomes higher than the last value taken by the reference display altitude (RéfAlt(min)), said means for adjusting the reference display altitude slave the value of the reference display altitude (RéfAlt(t)) to the instantaneous value of the altitude of said aircraft (a/c alt(t)).

10. The device according to claim 1, **characterised in that**, when said aircraft is descending at the time of the detection of a risk of terrain collision and accentuates its descent after the detection of the risk of terrain collision, said means for adjusting the reference display altitude slave the value of the reference display altitude (RéfAlt(t)) to the value of the short-term predicted altitude for said aircraft (prédite a/c alt(t)).

11. The device according to claim 1, **characterised in that**, when said aircraft is descending at the time of the detection of a risk of terrain collision and attenuates its descent after the detection of the risk of terrain collision, said means for adjusting the reference display altitude slave the value of the reference display altitude (RéfAlt(t)) to the value of the short-term predicted altitude for said aircraft (prédite a/c alt(t)).

12. The device according to claim 1, **characterised in that**, when said aircraft is descending at the time of the detection of a risk of terrain collision and begins to climb, said means for adjusting the reference display altitude slave the value of the reference display altitude (RéfAlt(t)) to the instantaneous value of the altitude of said aircraft (a/c alt(t)).

13. The device according to claim 1, **characterised in that**, when said aircraft is descending at the time of the detection of a risk of terrain collision and its instantaneous altitude (a/c alt(t)) becomes less than the last value taken by the reference display altitude (RéfAlt(min)), said means for adjusting the reference display altitude slave the value of the reference display altitude (RéfAlt(t)) to the instantaneous value of the altitude of said aircraft (a/c alt(t)).

14. The device according to claim 1, **characterised in that** said means for adjusting the reference display altitude instantaneously switch, at the time of the disappearance of a risk of terrain collision, between the value of the altitude associated with the instantaneous altitude (a/c alt(t)) of said aircraft and the value of the short-term predicted altitude for said aircraft (prédite a/c alt(t)).

15. The device according to claim 14, **characterised in that** the switching is triggered at the start of the next cycle for refreshing the image on the screen where the image is displayed.

16. The device according to claim 1, **characterised in that** said means for adjusting the reference display altitude allow soft switching, from the time of the disappearance of a risk of terrain collision, between the value of the altitude associated with the instantaneous altitude (a/c alt(t)) of said aircraft and the value of the short-term predicted altitude for said aircraft (prédite a/c alt(t)).
